# EUROPEAN PATENT APPLICATION

(11) **EP 4 693 652 A1**
(43) Date of publication of application: **11.02.2026**
(21) Application number: 24778753.4
(22) Date of filing: 13.02.2024
(51) Int. Cl.: H01M 50/213, H01M 50/289, H01M 50/291, H01M 50/505

(54) **BATTERY PACK AND METHOD FOR MANUFACTURING SAME**

(30) Priority: 27.03.2023 JP 2023049269
(71) Applicant: Panasonic Energy Co., Ltd., Moriguchi-shi, Osaka 570-8511 (JP)
(72) Inventor: TAWA, Yutaro, Kadoma-shi, Osaka 571-0057 (JP); ONISHI, Kazuma, Kadoma-shi, Osaka 571-0057 (JP)
(74) Representative: Eisenführ Speiser
(86) International application number: PCT/JP2024/004789
(87) International publication number: WO 2024/202608

(57) **Abstract**

Secondary battery cells can be fixed securely. A second holder 20 has rib receiving spaces 44 surrounding peripheries of push ribs 14. The rib receiving spaces 44 are defined by second partitions 22 and exterior cans of secondary battery cells 1. Adhesive layers 50 continuously extend through first gaps GP1 and second gaps GP2. Each first gap GP1 is defined between a periphery of the corresponding push rib 14 placed in the corresponding rib receiving space 44 and the exterior cans of adjacent secondary battery cells 1. Each second gap GP2 extends in a length direction of the secondary battery cells 1 between an inner surface of the corresponding second cylinder 21 and the exterior cans of the adjacent secondary battery cells 1. The inner surface is continuous from an end of a cutout bottom surface 25. Each second gap GP2 is defined in parts of the second cylinders 21 in a circumferential direction intersecting with the length direction. The first gaps GP1 have a first cross-sectional area S1 smaller than a second cross-sectional area S2 of the second gaps GP2 in a direction in which the rib receiving spaces 44 extend. The first cross-sectional area S1 is an area taken along a first plane intersecting with a direction in which the push ribs 14 protrude. The second cross-sectional area S2 is an area taken along a second plane intersecting with the direction in which the push ribs 14 protrude.

## Description

### TECHNICAL FIELD

The present disclosure relates to a battery pack and a method for manufacturing a battery pack.

### BACKGROUND ART

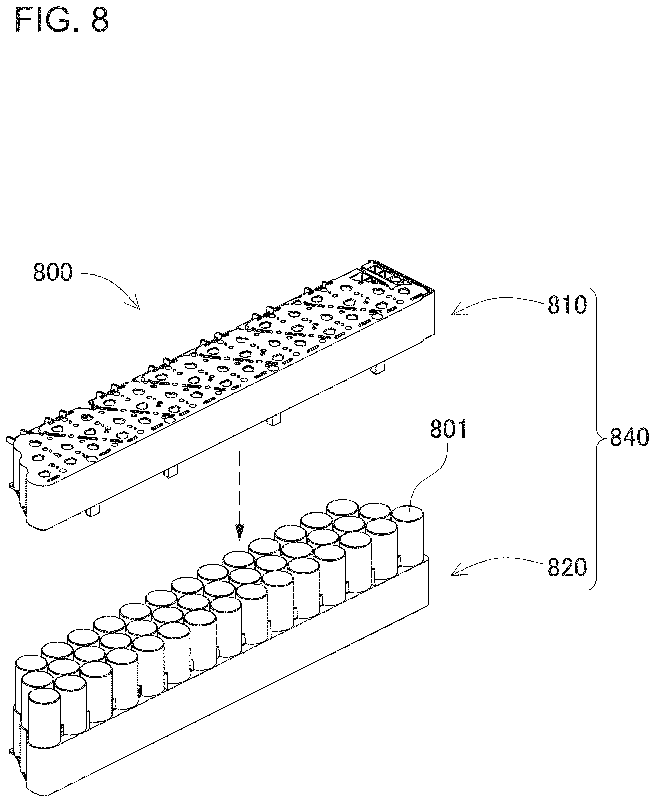

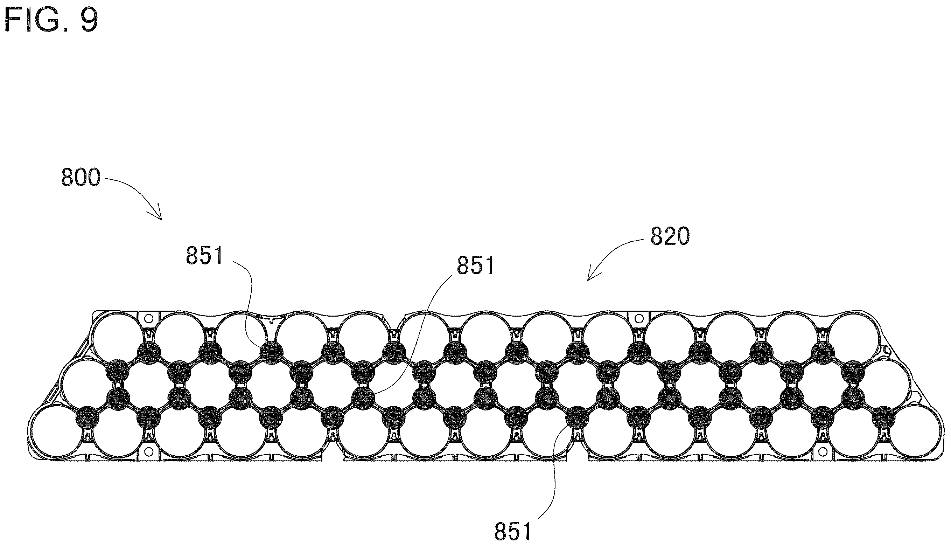

An electric device such as an electrically assisted bicycle or an electric scooter is driven using a battery pack including multiple secondary battery cells that are rechargeable, such as lithium-ion batteries, held in a battery holder and housed in an outer case (e.g., Patent Literature 1). Such multiple secondary battery cells are electrically connected in series or in parallel with lead plates fixed to electrodes of the secondary battery cells by, for example, welding. The secondary battery cells are bonded to the battery holder with an adhesive to prevent rotation and displacement of the secondary battery cells under an external force such as vibration applied during use or transportation of the battery pack, further preventing damage to the welding between the secondary battery cells and the lead plates. In the exploded perspective view in FIG. 8, for example, a battery holder 840 is divided into two parts that are an upper holder 810 and a lower holder 820. A secondary battery cell 801 has its lower half portion placed in the lower holder 820 and its upper half portion exposed. An uncured adhesive 851 is applied to the positions shown in FIG. 9. The upper holder is then placed over the lower holder before the adhesive 851 is cured. This allows secondary battery cells 801 to be fixed with the adhesive applied to the upper half portion, or specifically, about a half, of each secondary battery cell 801.

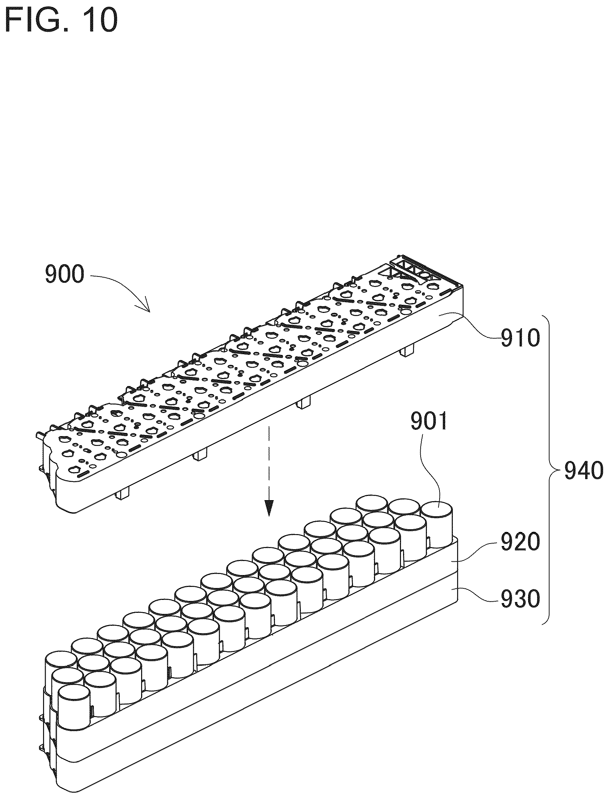

In the exploded perspective view in FIG. 10, a battery holder 940 is divided into three parts that are an upper holder 910, a middle holder 920, and a lower holder 930. With the method described above, an area to which the adhesive can be applied is reduced to about one-third of each secondary battery cell. This lowers the bonding strength, causing difficulty in maintaining strength against, for example, vibration.

### CITATION LIST

### PATENT LITERATURE

Patent Literature 1: Re-publication of PCT International Publication No. WO 2019/208157

### SUMMARY OF INVENTION

### TECHNICAL PROBLEM

One or more aspects of the present disclosure are directed to a battery pack including secondary battery cells fixed securely, and a method for manufacturing the battery pack.

### SOLUTION TO PROBLEM

A battery pack according to one aspect of the present disclosure includes a plurality of secondary battery cells each contained in an exterior can being cylindrical and a battery holder including a first holder and a second holder. The first holder includes a plurality of first cylinders each accommodating a portion of the exterior can of a corresponding secondary battery cell of the plurality of secondary battery cells arranged with end faces of the plurality of secondary battery cells aligned flush with one another. The first holder includes first partitions defining the plurality of first cylinders. The second holder includes a plurality of second cylinders each accommodating another portion of the exterior can of the corresponding secondary battery cell. The second holder includes second partitions defining the plurality of second cylinders. The first holder and the second holder in the battery holder are connected to each other to have the plurality of first cylinders continuous with the plurality of respective second cylinders and define cell accommodating spaces separately accommodating the plurality of secondary battery cells. The first holder includes, between adjacent secondary battery cells of the plurality of secondary battery cells, push ribs being columnar and protruding toward the second holder at opening ends of the plurality of respective first cylinders facing the second holder. The second holder has cutouts receiving the respective push ribs at positions corresponding to the push ribs at opening ends of the plurality of respective second cylinders facing the first holder. The second holder has rib receiving spaces surrounding peripheries of the respective push ribs. The rib receiving spaces are defined by the second partitions in the plurality of second cylinders having the cutouts and exterior cans of the adjacent secondary battery cells exposed from the cutouts. Adhesive layers continuously extend through first gaps and second gaps. Each of the first gaps is defined between a periphery of a corresponding push rib of the push ribs placed in the respective rib receiving spaces and the exterior cans of the adjacent secondary battery cells. Each of the second gaps extends in a length direction of the plurality of secondary battery cells between an inner surface of a corresponding second cylinder of the plurality of second cylinders and the exterior cans of the adjacent secondary battery cells. The inner surface is continuous from an end of a bottom surface of a corresponding cutout of the cutouts. Each of the second gaps is defined in parts of the plurality of second cylinders in a circumferential direction intersecting with the length direction. The first gaps have a first cross-sectional area smaller than a second cross-sectional area of the second gaps in a direction in which the rib receiving spaces extend. The first cross-sectional area is an area taken along a first plane intersecting with a direction in which the push ribs protrude. The second cross-sectional area is an area taken along a second plane intersecting with the direction in which the push ribs protrude.

A method for manufacturing a battery pack according to another aspect of the present disclosure is a method for manufacturing a battery pack including a plurality of secondary battery cells each contained in an exterior can being cylindrical and a battery holder including a first holder and a second holder. The method includes preparing the first holder and the second holder. The first holder includes a plurality of first cylinders each to accommodate a portion of the exterior can of a corresponding secondary battery cell of the plurality of secondary battery cells. The first holder includes, between adjacent secondary battery cells of the plurality of secondary battery cells, push ribs being columnar and protruding toward the second holder at opening ends of the plurality of first cylinders facing the second holder. The second holder includes a plurality of second cylinders each to accommodate another portion of the exterior can of the corresponding secondary battery cell. The second holder has cutouts to receive the respective push ribs at positions corresponding to the push ribs at opening ends of the plurality of second cylinders facing the first holder. The method includes placing a portion of the exterior can of each of the plurality of secondary battery cells into a corresponding second cylinder of the plurality of second cylinders in the second holder, applying an uncured adhesive to the cutouts of the second holder, placing another portion of the exterior can of each of the plurality of secondary battery cells into a corresponding first cylinder of the plurality of first cylinders in the first holder, inserting the push ribs on the first holder into rib receiving spaces on the second holder, pushing the uncured adhesive into first gaps and second gaps, and curing the uncured adhesive. Each of the first gaps is defined between a periphery of a corresponding push rib of the push ribs and exterior cans of adjacent secondary battery cells. Each of the second gaps extends in a length direction of the plurality of secondary battery cells between an inner surface of a corresponding second cylinder of the plurality of second cylinders and the exterior cans of the adjacent secondary battery cells. The inner surface is continuous from an end of a bottom surface of a corresponding cutout of the cutouts. Each of the second gaps is defined in parts of the plurality of second cylinders in a circumferential direction intersecting with the length direction. The first gaps have a first cross-sectional area smaller than a second cross-sectional area of the second gaps in a direction in which the rib receiving spaces extend. The first cross-sectional area is an area taken along a first plane intersecting with a direction in which the push ribs protrude. The second cross-sectional area is an area taken along a second plane intersecting with the direction in which the push ribs protrude.

### ADVANTAGEOUS EFFECTS OF INVENTION

The battery pack and the method for manufacturing the battery pack according to the above aspects of the present disclosure allow the uncured adhesive that forms the adhesive layers to be guided more easily to the second gaps than to the first gaps, thus facilitating application of the adhesive to the second holder in addition to the first holder for increased bonding strength of the secondary battery cells.

### BRIEF DESCRIPTION OF DRAWINGS

FIG. 1 is a perspective view of a battery pack according to Embodiment 1;
FIG. 2 is a longitudinal sectional view of the battery pack taken along line II-II in FIG. 1;
FIG. 3 is an exploded perspective view of the battery pack in FIG. 1 from which a first holder is removed;
FIG. 4 is an exploded perspective view of the battery pack in FIG. 3 viewed obliquely from below, with an enlarged view of main components;
FIG. 5 is an exploded perspective view of the battery pack in FIG. 3 from which a second holder and a third holder are separated, with an enlarged view of main components;
FIG. 6 is an exploded perspective view of the second holder and the first holder in FIG. 5, showing a connection interface between the second holder and the first holder, with an enlarged view of main components;
FIG. 7 is a plan view of the second holder;
FIG. 8 is an exploded perspective view of a battery pack in a comparative example;
FIG. 9 is a plan view of the battery pack in FIG. 8, showing the positions to which an adhesive is applied;
FIG. 10 is an exploded perspective view of a battery pack in another comparative example;
FIG. 11 is a schematic sectional view of the battery pack in FIG. 2, showing an uncured adhesive being applied when assembling the battery pack;
FIG. 12 is a plan view of the battery pack in FIG. 3, showing the positions to which the adhesive is applied;
FIG. 13 is an exploded perspective view of the second holder in FIG. 6, showing a push rib being inserted into the second holder;
FIG. 14 is a longitudinal sectional view taken along line XIV-XIV in FIG. 13;
FIG. 15 is a longitudinal sectional view taken along line XV-XV in FIG. 13;
FIG. 16 is a horizontal sectional view taken along line XVI-XVI in FIGs. 14 and 15; and
FIG. 17 is a horizontal sectional view taken along line XVII-XVII in FIGs. 14 and 15.

### DESCRIPTION OF EMBODIMENTS

One or more aspects of the present disclosure may have the structures and features described below.

A battery pack according to another aspect of the present disclosure is the battery pack according to any one of the above aspects in which the plurality of second cylinders in the second holder have inner surfaces defining recesses in regions defining the second gaps. In the above structure, the inner surfaces of the second cylinders are partially recessed to allow the second cross-sectional area of the second gaps to be larger than the first cross-sectional area of the first gaps. This allows an uncured adhesive to be guided to a deep part in each second cylinder.

A battery pack according to another aspect of the present disclosure is the battery pack according to any one of the above aspects in which the recesses are arc-shaped in a cross-sectional view taken along the second plane.

A battery pack according to still another aspect of the present disclosure is the battery pack according to any one of the above aspects in which the battery holder further includes a third holder including a plurality of third cylinders each accommodating still another portion of the exterior can of the corresponding secondary battery cell, and the third holder is connected to a second bonding surface of the second holder opposite to a first bonding surface facing the first holder. In the above structure, the battery holder dividable into the first holder, the second holder, and the third holder can have areas for applying an adhesive to hold the secondary battery cells in a fixed manner.

A battery pack according to still another aspect of the present disclosure is the battery pack according to any one of the above aspects in which the first holder, the second holder, and the third holder have substantially the same height.

A battery pack according to still another aspect of the present disclosure is the battery pack according to any one of the above aspects in which each of the push ribs has an end face spaced from a bottom surface of a corresponding cutout of the cutouts, and each of the adhesive layers extends in a gap between the end face of a corresponding push rib of the push ribs and the bottom surface of a corresponding cutout of the cutouts. In the above structure, the uncured adhesive can continuously bond the exterior cans of adjacent secondary battery cells through the gap between the end face of the corresponding push rib and the bottom surface of the corresponding cutout in each rib receiving space, increasing the bonding strength.

A battery pack according to still another aspect of the present disclosure is the battery pack according to any one of the above aspects in which each of the rib receiving spaces is defined by three or more secondary battery cells arranged adjacent and proximate to one another in the battery holder, and the rib receiving spaces receive the respective push ribs.

A battery pack according to still another aspect of the present disclosure is the battery pack according to any one of the above aspects in which the plurality of secondary battery cells are arranged in rows in a staggered manner, and the push ribs are hexagonal prisms. In the above structure, the side surfaces of the push ribs that are hexagonal prisms face the respective surfaces of the exterior cans of the secondary battery cells and define the first gaps in spaces in which three adjacent secondary battery cells are proximately arranged in rows in a staggered manner.

A battery pack according to still another aspect of the present disclosure is the battery pack according to any one of the above aspects further including lead plates connecting the end faces of the plurality of secondary battery cells. In the above structure, cylindrical secondary battery cells are effectively prevented from rotating in the cell accommodating spaces, thus preventing breakage of connection with the lead plates.

A method for manufacturing a battery pack according to still another aspect of the present disclosure is the method for manufacturing the battery pack according to any one of the above aspects in which the battery holder further includes a third holder including a plurality of third cylinders each to accommodate still another portion of the exterior can of the corresponding secondary battery cell. The method further includes engaging the third holder with the second holder to temporarily fix the third holder to the second holder, and inserting the push ribs into the respective rib receiving spaces to push the uncured adhesive until the uncured adhesive reaches the third holder. The third holder is bonded to a second bonding surface of the second holder opposite to a first bonding surface facing the first holder.

One or more aspects of the present disclosure will now be described with reference to the drawings. One or more embodiments described below merely embody the technical idea of the present disclosure, and the present disclosure is not limited to the embodiments described below. The components specified in the claims are not limited to the components described in one or more embodiments. In particular, the dimensions, materials, shapes, and relative positions of the components described in one or more embodiments are mere examples and are not intended to limit the scope of the present disclosure, unless otherwise specified. The sizes and the positional relationships of the components shown in the drawings may be exaggerated for clarity. The same names and the same reference numerals below denote the same or similar components, which may not be described in detail. For elements that constitute one or more aspects of the present disclosure, multiple elements may be formed by a single component that serves as these multiple elements, or the function(s) of a single element may be implemented by multiple components.

A battery pack according to one or more embodiments of the present disclosure may be used as, for example, a power supply for portable electrical devices such as vacuum cleaners and power tools, a power supply for server backup as a stationary power storage or a power supply device for household use, business use, and factory use, a power supply for driving electrically assisted bicycles, and a power supply for driving vehicles such as electric scooters, electric carts, hybrid vehicles, and electric vehicles. A battery pack according to one embodiment of the present disclosure for electrically assisted bicycles will now be described.

### [EMBODIMENT 1]

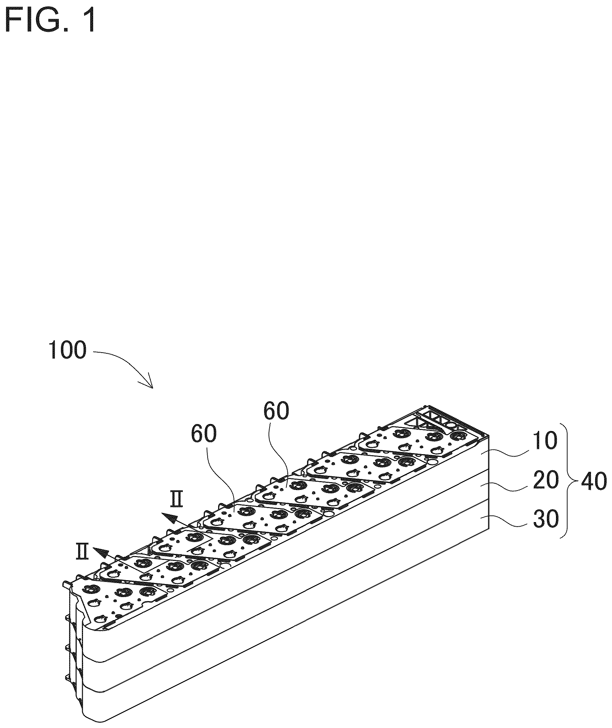

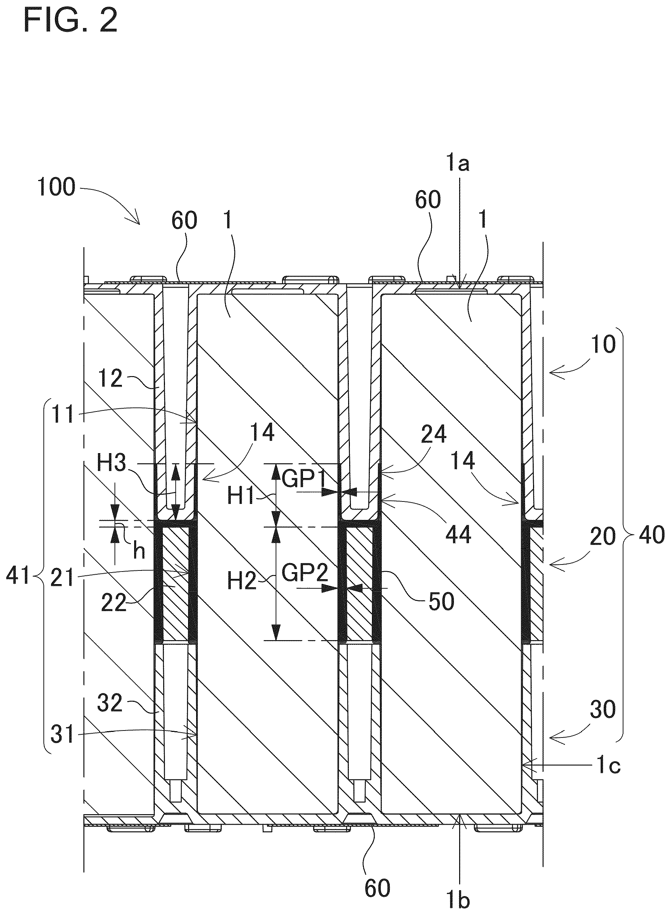

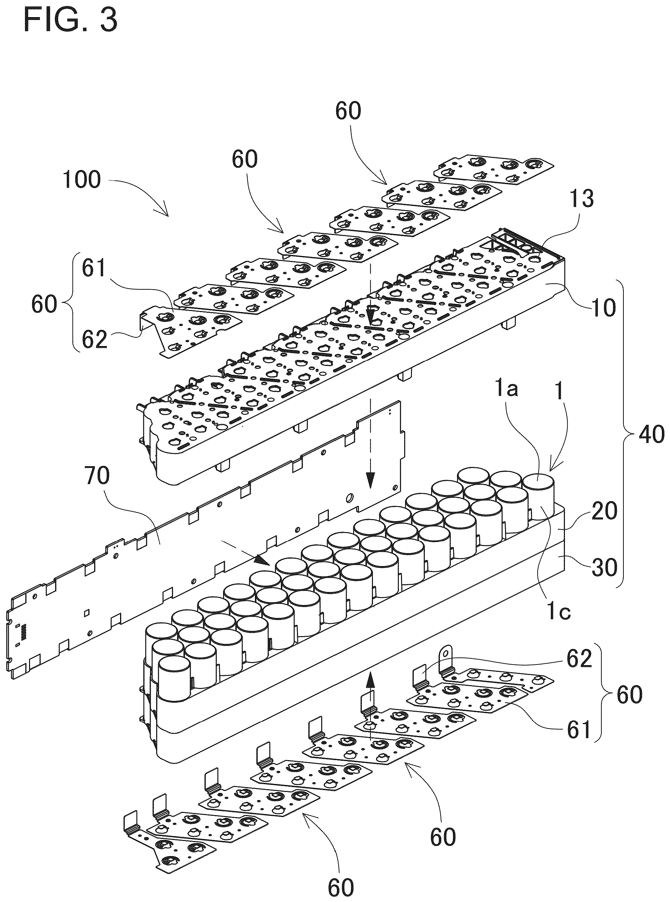

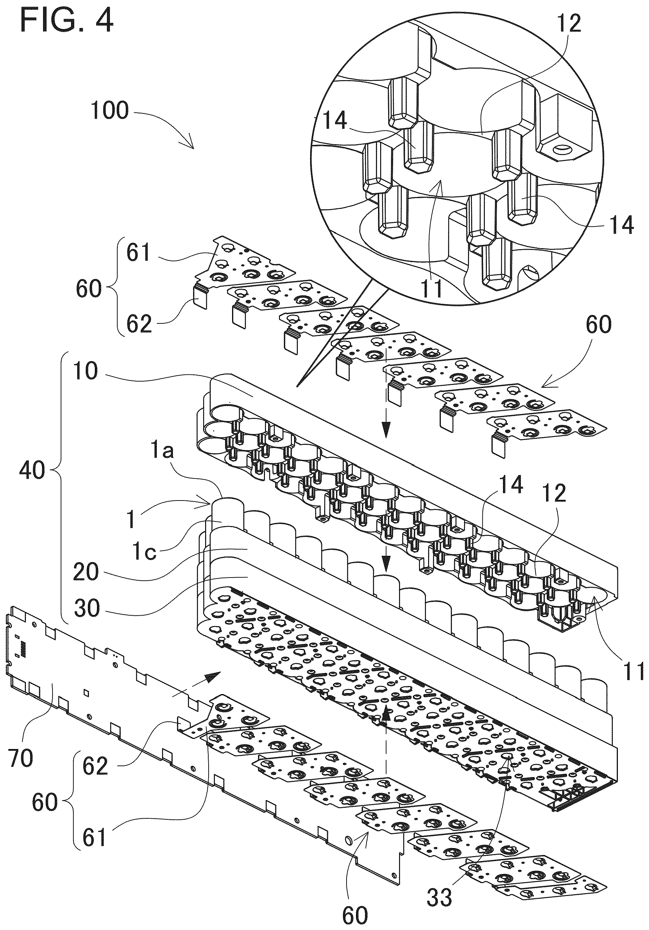

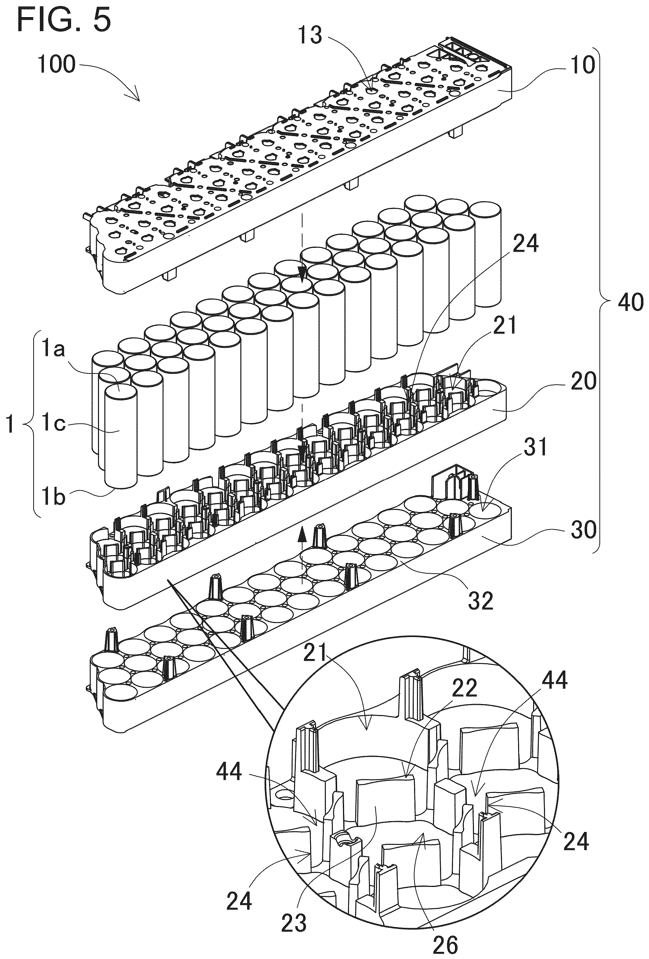

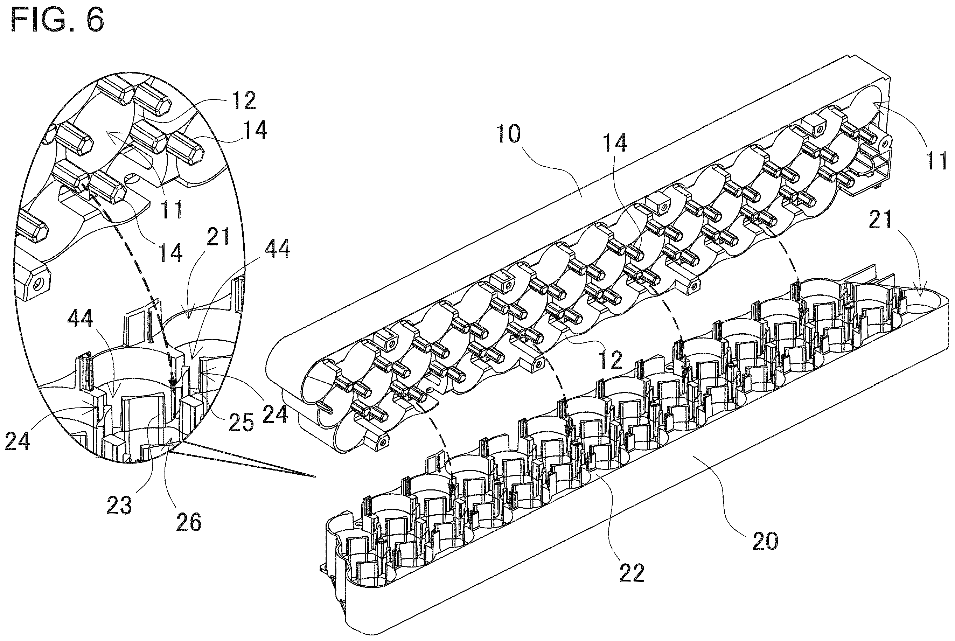

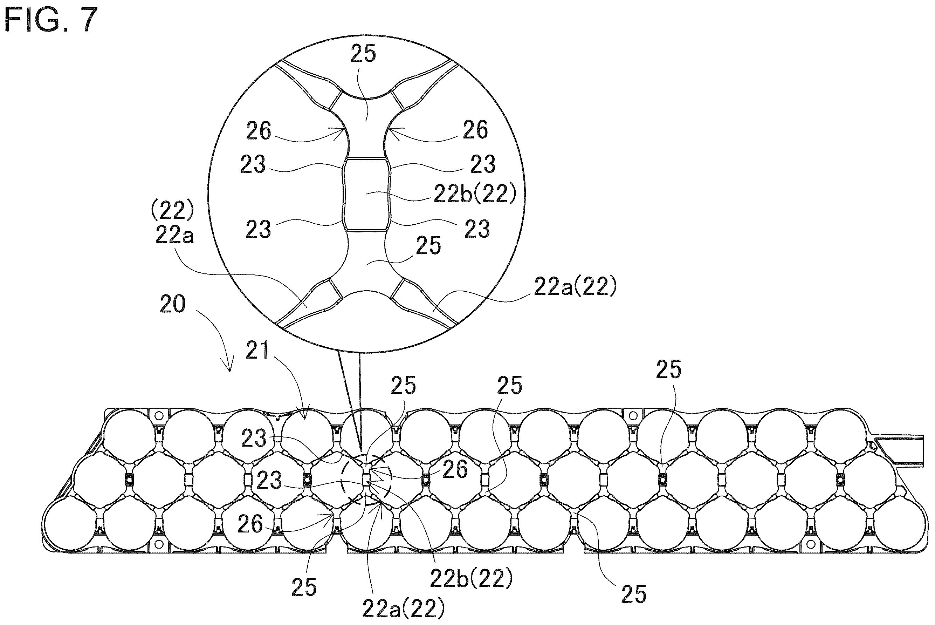

A battery pack 100 according to Embodiment 1 of the present disclosure is shown in FIGs. 1 to 7. FIG. 1 is a perspective view of the battery pack 100 according to Embodiment 1. FIG. 2 is a longitudinal sectional view of the battery pack 100 taken along line II-II in FIG. 1. FIG. 3 is an exploded perspective view of the battery pack 100 in FIG. 1 from which a first holder 10 is removed. FIG. 4 is an exploded perspective view of the battery pack 100 in FIG. 3 viewed obliquely from below, with an enlarged view of main components. FIG. 5 is an exploded perspective view of the battery pack100 in FIG. 3 from which a second holder 20 and a third holder 30 are separated, with an enlarged view of main components. FIG. 6 is an exploded perspective view of the second holder 20 and the first holder 10 in FIG. 5, showing a connection interface between the second holder 20 and the first holder 10. FIG. 7 is a plan view of the second holder 20. The battery pack 100 shown in these figures includes multiple secondary battery cells 1 and a battery holder 40. The battery pack 100 shown in FIG. 1 may be housed in an additional outer case.

### (Secondary Battery Cell 1)

Each secondary battery cell 1 extends in one direction and has a pair of end faces intersecting with a direction in which the secondary battery cell 1 extends. The end faces of the secondary battery cell 1 facing each other include a first end face 1a and a second end face 1b. A cell side surface 1c connects the first end face 1a and the second end face 1b. The first end face 1a may be on the positive electrode end and the second end face 1b may be on the negative electrode end of the secondary battery cell 1. The first end face 1a, which is on the positive electrode end, has a gas outlet that opens in response to increased pressure inside the secondary battery cell 1. Such a gas outlet may include a safety valve or an end cap with a cut to release pressure from the opening end.

The secondary battery cells 1 may be any known secondary batteries including, for example, lithium-ion batteries, nickel-metal hydride batteries, and nickel-cadmium batteries. As shown in FIGs. 2 to 5, the outer shape of each secondary battery cell 1 is cylindrical. Each secondary battery cell 1 is contained in an exterior can extending in the length direction.

### (Lead Plate 60)

Lead plates 60 are located on the side surfaces of the battery holder 40. The lead plates 60 connect the electrodes on the end faces 1c of the secondary battery cells 1 to connect the multiple secondary battery cells 1 in series or in parallel. In the example shown in, for example, FIGs. 1 to 4, the lead plates 60 connect the end faces 1c of forty-two secondary battery cells 1, with three rows connected in parallel with each row including fourteen secondary battery cells 1 connected in series. For example, the number or arrangement of secondary battery cells or the number of connections in series or in parallel is not limited to this example. Any number or arrangement of secondary battery cells can be used as appropriate. The lead plates 60 are highly conductive metal plates, such as nickel plates. Each lead plate 60 may include an insulating plate on its end face as appropriate. The insulating plate is formed from a material with high insulation properties, such as paper or mica.

As shown in FIGs. 3 to 4, each lead plate 60 has a lead bonding surface 61 connected to the end faces 1c of adjacent secondary battery cells 1, and a lead bend 62 bent at an end of the lead bonding surface 61. The lead bend 62 is connected to a circuit board 70. In FIG. 5, the lead plates are not shown for convenience.

### (Circuit Board 70)

The circuit board 70 is electrically connected to a battery assembly 10. The circuit board 70 includes, for example, a protection circuit and a charging and discharging circuit for the secondary battery cells 1. As shown in FIG. 3, the circuit board 70 is a rectangular plate in a perpendicular orientation with respect to the side surface (the rear surface in FIG. 3) of the battery assembly 10. The circuit board 70 may be in a horizontal orientation, rather than in the horizontal orientation. The circuit board 70 may be formed from a hard resin material for, for example, a glass epoxy substrate, or a ceramic material.

### (Battery Holder 40)

The battery holder 40 is divided into, in the longitudinal direction of the exterior cans of the secondary battery cells 1, three parts that are three subholders. In the example shown in, for example, FIGs. 2 to 5, the battery holder 40 includes the first holder 10, the second holder 20, and the third holder 30 in this order from the top. The first holder 10, the second holder 20, and the third holder 30 are assembled together to have a first cylinder 11, a second cylinder 21, and a third cylinder 31 continuous with one another and define cell accommodating spaces 41 separately accommodating the secondary battery cells 1. In other words, the inner surfaces of the first cylinder 11, the second cylinder 21, and the third cylinder 31 are designed to be aligned with one another when the first holder 10, the second holder 20, and the third holder 30 are assembled together. This allows the cell accommodating spaces 41 to be hollow cylinders separately accommodating and holding the secondary battery cells 1 that are electrically and thermally insulated from one another. The secondary battery cells 1 accommodated in the respective cell accommodating spaces 41 have the first end faces 1a aligned flush with one another as shown in, for example, FIG. 3. In the example shown in, for example, FIG. 5, the secondary battery cells 1 are arranged in three rows in a staggered manner with the secondary battery cells 1 in one row being offset from the secondary battery cells 1 in an adjacent row. The secondary battery cells 1 arranged in a staggered manner can be most closely arranged when a straight line extending toward the center of a secondary battery cell 1 and another straight line extending toward the center of an adjacent secondary battery cell 1 form 120°. The straight lines extending toward the centers of the adjacent secondary battery cells 1 and forming 120° may be slightly shifted to widen or narrow the angle, or more specifically, shifted 10% (±12°), with the outer shape of the battery holder 40 changed in the longitudinal direction or the lateral direction.

### (First Holder 10)

As shown in, for example, FIGs. 4 to 6, the first holder 10 includes multiple first cylinders 11 each accommodating a portion of the exterior can of the corresponding secondary battery cell 1. Each first cylinder 11 is defined by a first partition 12 that is cylindrical. As shown in, for example, FIG. 3, each first cylinder 11 has a closed top surface with a first window 13 being open in the center of the top surface to expose one of the end faces, or specifically, the first end face 1a, or in other words, for example, the positive electrode located on the upper surface of the secondary battery cell 1. As shown in, for example, FIG. 4, each first cylinder 11 is fully open at the bottom to expose the corresponding secondary battery cell 1. In the example shown in, for example, FIGs. 2 to 4, each first cylinder 11 accommodates about the upper one-third of a cylindrical secondary battery cell 1.

### (Second Holder 20)

The second holder 20 includes multiple second cylinders 21 each accommodating another portion of the exterior can of the corresponding secondary battery cell 1. Each second cylinder 21 is also defined by a second partition 22 that is cylindrical. As shown in, for example, FIG. 5, each second cylinder 21 is open on the top and bottom to allow the secondary battery cell 1 to be placed through the second cylinder 21. In the example shown in, for example, FIGs. 2 to 4, each second cylinder 21 accommodates about the middle one-third of the corresponding cylindrical secondary battery cell 1. The second holder 20 is connected to the lower surface of the first holder 10.

### (Third Holder 30)

The third holder 30 includes multiple third cylinders 31 each accommodating still another portion of the exterior can of the corresponding secondary battery cell 1. Each third cylinder 31 is also defined by a third partition 32 that is cylindrical. As shown in, for example, FIG. 4, each third cylinder 31 has a closed bottom surface with a third window 33 being open in the center of the bottom surface to expose the other of the end faces, or specifically, the second end face 1b, or in other words, for example, the negative electrode located on the lower surface of the secondary battery cell 1. As shown in, for example, FIG. 5, each third cylinder 31 is fully open at the top to expose the corresponding secondary battery cell 1. In the example shown in, for example, FIGs. 2 to 4, each third cylinder 31 accommodates about the lower one-third of the corresponding cylindrical secondary battery cell 1. The third holder 30 is connected to the lower surface of the second holder 20. The second holder 20 has a first bonding surface, which is on its upper surface, bonded to the first holder 10, and a second bonding surface, which is on its lower surface, bonded to the third holder 30. In the example in, for example, FIGs. 4 and 5, the first holder 10, the second holder 20, and the third holder 30 have substantially the same height.

The first cylinders 11, the second cylinders 21, and the third cylinders 31 each have an inner surface that is substantially cylindrical to extend along the cell side surface 1c that is the periphery of the exterior can of each cylindrical secondary battery cell 1. The inner surfaces of the first cylinders 11, the second cylinders 21, and the third cylinders 31 may be perfectly circular in the horizontal cross section, or may partially have protrusions 23 slightly protruding and pressed against the cell side surfaces 1c of the corresponding secondary battery cells 1. In this structure, each secondary battery cell 1 can be placed in the corresponding cell accommodating space 41 with a margin between the outer diameter of the secondary battery cell 1 and the inner diameter of the cell accommodating space 41. The protrusions 23 pressed against the cell side surface 1c can prevent rattling or rotation of the secondary battery cell 1 in the cell accommodating space 41 caused by the margin. In the example in, for example, FIGs. 4 to 6, the inner surfaces of the first cylinders 11 and the third cylinders 31 are each cylindrical, and the inner surfaces of the second cylinders 21 partially define the protrusions 23 as shown in the horizontal sectional view in FIG. 7. In this manner, the first cylinder 11, the second cylinder 21, and the third cylinder 31 may have different inner surfaces with partially changed portions. The cylinders in one of the subholders may have the inner surfaces defining a different shape from the cylinders in other subholders. Each cylinder in one subholder may have an inner surface defining a different shape from other cylinders.

As shown in FIG. 7, second cylinders 21 for three adjacent secondary battery cells 1 define a space (also referred to as a dense space) in which a rib receiving space 44 is defined. Thus, second partitions 22 with cutouts 24 have the protrusions 23. Each second cylinder 21 has, on parts of its inner surface, recesses 26 to define second gaps GP2 (described later). Thus, each inner surface defines the protrusions 23 to securely hold the corresponding secondary battery cell 1.

The second partition 22 defining the cutouts 24 may partially have nonuniform thickness to define the protrusions 23. The second partitions 22 may include bosses for connecting the second holder 20 to the first holder 10 as appropriate. The second partitions 22 including the bosses may be thick. The second partition 22 with a thickness greater than a thickness of a boss can provide high strength. The second partitions 22 include second partitions 22b in the middle row and shown in a vertical orientation in the example in FIG. 7 that are thicker than other second partitions 22a.

### (Adhesive Layer 50)

The cylindrical secondary battery cells 1 are fixed with an adhesive 51 to prevent rotation in the cell accommodating spaces 41 in the battery holder 40. An uncured adhesive 51 extends into gaps between the cell accommodating spaces 41 in the battery holder 40 and the cell side surfaces 1c of the secondary battery cells 1 and, when cured, forms an adhesive layer 50 to prevent the cylindrical secondary battery cells 1 from rotating in the cell accommodating spaces 41.

When the secondary battery cells are rotated or are displaced in the cell accommodating spaces in the battery holder under an external force such as vibration applied during use or transportation of the battery pack, welded portions between the electrodes of the secondary battery cells and the lead plates may receive damage. The adhesive 51 is thus used to prevent the rotation.

To fix the secondary battery cells to the cell accommodating spaces in the battery holder with the adhesive, the uncured adhesive may be applied to the battery holder that is divided into subholders. As shown in the exploded perspective view in FIG. 8, a battery holder 840 is divided into two parts that are an upper holder 810 and a lower holder 820. Secondary battery cells 801 each have a lower half portion placed in the lower holder and an upper half portion exposed. An uncured adhesive 851 is applied to the positions shown in FIG. 9. The upper holder is then placed on the lower holder, causing the adhesive 851 to be pushed onto the inner surfaces of the upper holder to extend to the upper half portion of each secondary battery cell 801. The adhesive 851 is then cured to fix the secondary battery cells 801 with the adhesive 851 applied to the upper half portion, or specifically, about a half, of each secondary battery cell 801.

A recent request for higher output in secondary battery cells may increase the length of the exterior can of each secondary battery cell. In contrast, a strong request for smaller battery packs may decrease the thickness of partitions defining the cell accommodating spaces in the battery holder. A battery holder is formed by injection molding of a resin. For longer exterior cans of secondary battery cells and thinner partitions defining cell accommodating spaces in a battery holder, the battery holder divided into two parts in the length direction of the secondary battery cells may cause a shortage of the resin during injection molding. Thus, the battery holder may be divided into three parts with each subholder having a reduced height. However, in a battery pack 900 as shown in the exploded perspective view in FIG. 10, a battery holder 940 is divided into three parts that are an upper holder 910, a middle holder 920, and a lower holder 930. An area to which the adhesive can be applied with the method described above with reference to FIGs. 8 and 9 is reduced to about one-third of each secondary battery cell 901. This lowers the bonding strength, causing difficulties in preventing rotation of the secondary battery cells.

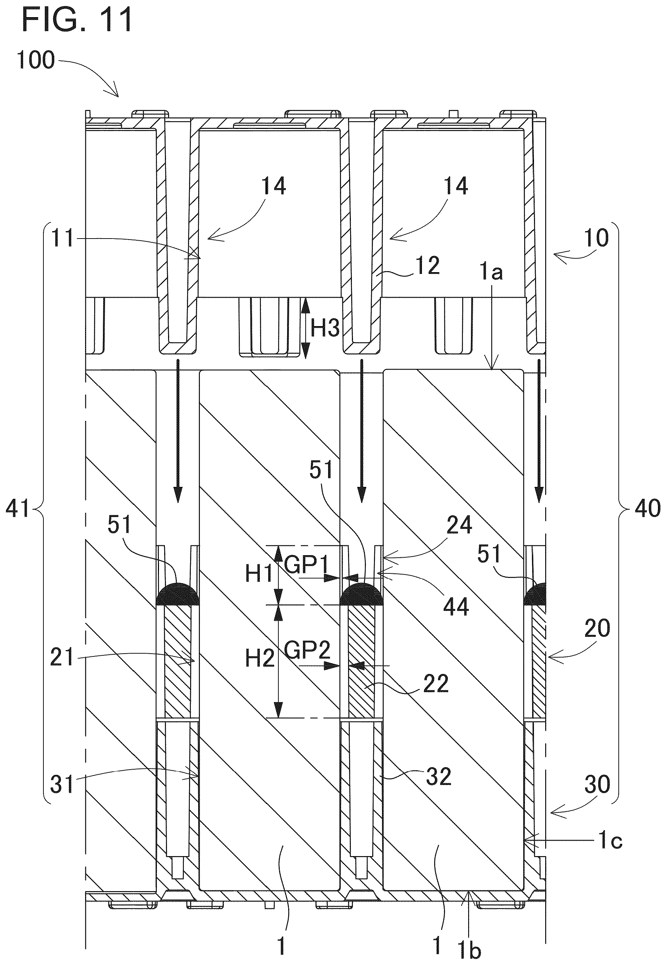

In contrast, the battery pack 100 according to Embodiment 1 has a gap between each cell accommodating space 41 and the cell side surface 1c of the corresponding secondary battery cell 1 to allow the uncured adhesive 51 to extend to the lower subholder. In other words, the uncured adhesive 51 extends deeper in the length direction of the secondary battery cell 1, increasing the adhesive area and increasing the bonding strength. More specifically, as shown in FIG. 11, the first holder 10 includes push ribs 14, and the second holder 20 has the cutouts 24 defining the respective rib receiving spaces 44. A second gap GP2 defined below the corresponding push rib 14 between the inner surface of the second cylinder 21 and the cell side surface 1c, which is the exterior can surface of the secondary battery cell 1, is wider than a first gap GP1 surrounding the corresponding push rib 14. When the uncured adhesive 51 is applied on the interface between the first holder 10 and the second holder 20, the adhesive 51 is pushed onto the inner surfaces of the second holder 20, in addition to the first holder 10, to increase the application area of the adhesive 51 and increase the bonding strength. This prevents each cylindrical secondary battery cell 1 from rotating in the corresponding cell accommodating space 41 and prevents disconnection from the corresponding lead plate 60. Each structure will be described in detail below.

### (Push Rib 14)

The first holder 10 includes, between adjacent secondary battery cells 1, the push ribs 14 that are columnar and protruding toward the second holder 20 at the opening ends of the first cylinders 11 facing the second holder 20. As shown in, for example, FIGs. 4 and 6, each push rib 14 extends from the end face of the first partition 12 into a space between the secondary battery cells 1, or more specifically, into the dense space. FIG. 6 is an exploded perspective view with an enlarged view of main components, not showing the secondary battery cells in FIG. 5. Each push rib 14 has the side surface partially aligned with the inner surface of the corresponding first cylinder 11. In this structure, the uncured adhesive 51 pushed by the push ribs 14 spreads along the side surfaces of the push ribs 14 and enters the gaps between the inner surfaces of the first holder 10 and the cell side surfaces 1c of the secondary battery cells 1. This allows application of the adhesive 51 to a larger area. In the present disclosure, being aligned with each other includes design tolerances and design errors.

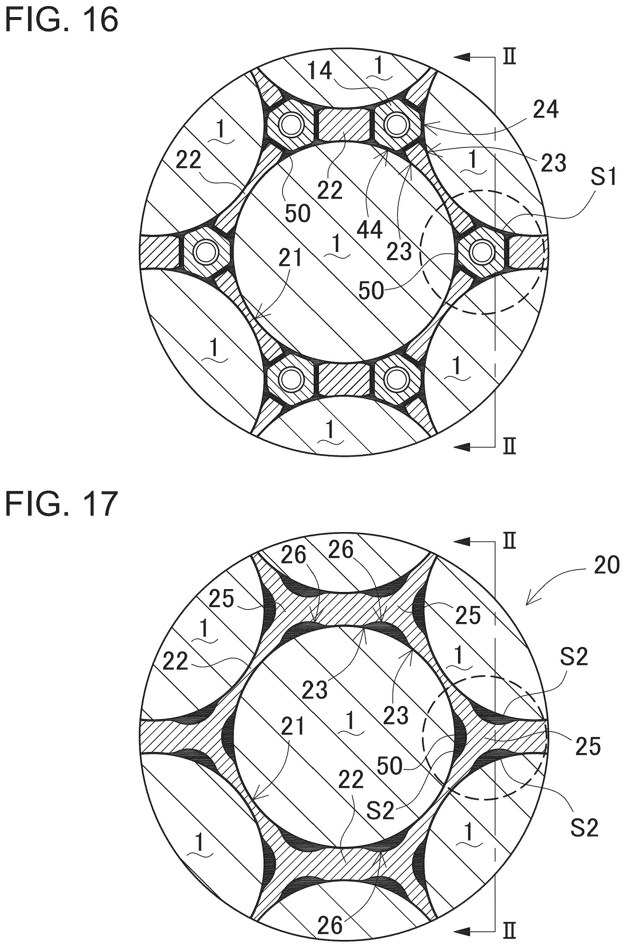

In the example in FIG. 4, the outer shape of each push rib 14 is a hexagonal prism. As shown in, for example, the horizontal sectional view in FIG. 16, the side surfaces of the push ribs 14 being hexagonal prisms face the cell side surfaces 1c of the respective secondary battery cells 1 and define the first gaps GP1 (described in detail later) in the dense space in which three adjacent secondary battery cells 1 are proximately arranged in a staggered manner. With this arrangement, a straight line from the center of a push rib 14 to the center of a secondary battery cell 1 and another straight line from the center of the same push rib 14 to the center of an adjacent secondary battery cell 1 form 120°. The push ribs may not be in this shape, and may be in octagonal or other polygonal shape, or in a cylindrical shape.

### (Cutout 24)

The second holder 20 has cutouts 24 to receive the push ribs 14 at the positions corresponding to the push ribs 14 at the opening ends of the second cylinders 21 facing the first holder 10. As shown in, for example, FIGs. 5, 6, and 13, each cutout 24 is formed by partially cutting out the second partition 22 defining the second cylinder 21.

### (Rib Receiving Space 44)

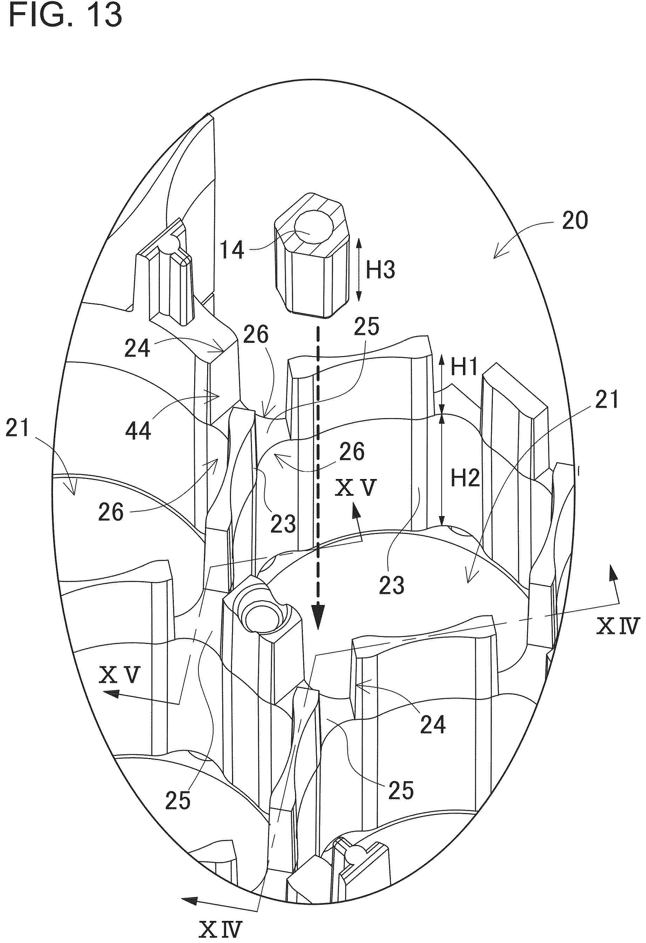

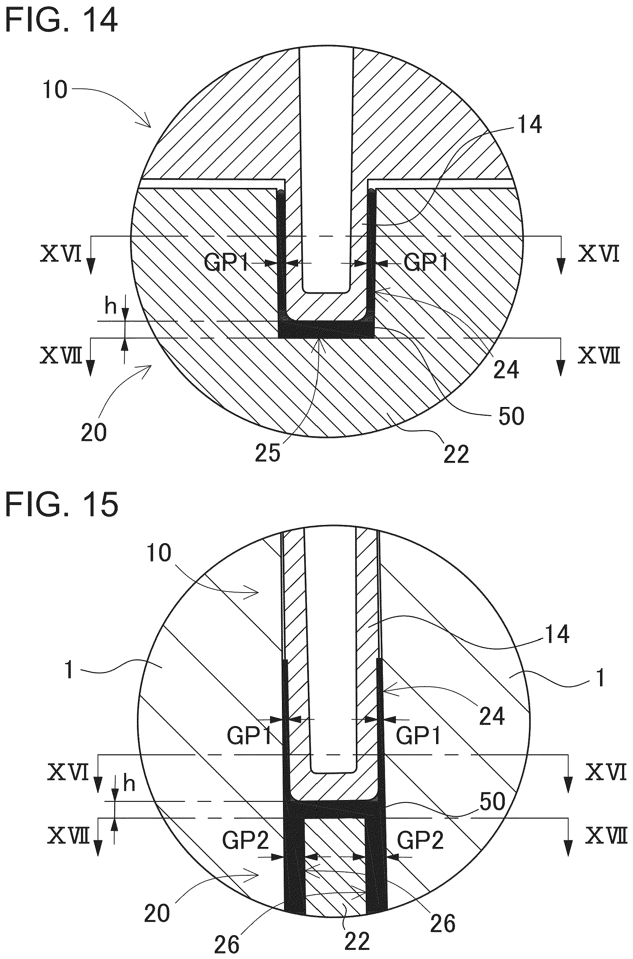

The rib receiving spaces 44 surrounding peripheries of the respective push ribs 14 are defined in the regions of the cutouts 24 in the second holder 20. As shown in FIG. 13, each rib receiving space 44 is defined by a cutout bottom 25 that is the bottom surface of the cutout 24, the second partition 22 of the second cylinder 21 defining the cutout 24, and the cell side surface 1c of the corresponding secondary battery cell 1 exposed from the cutout 24. As shown in, for example, FIGs. 14 and 15, each push rib 14 has its side surfaces covered with the inner surfaces of the respective second partitions 22 and the corresponding cell side surface 1c, and its end face covered with the corresponding cutout bottom 25.

As shown in FIGs. 14 and 15, each push rib 14 has an end face spaced from the corresponding cutout bottom 25 by a height h. The uncured adhesive 51 then spreads between the end face of the push rib 14 and the cutout bottom 25. The adhesive layer 50 that is cured thus extends through the gap with the height h, continuously surrounding the rib receiving space 44. In this manner, the uncured adhesive 51 is continuously bonded to the outer cans of adjacent secondary battery cells through the gap with the height between the end face of the push rib 14 and the cutout bottom 25 in each rib receiving space 44 to increase the bonding strength.

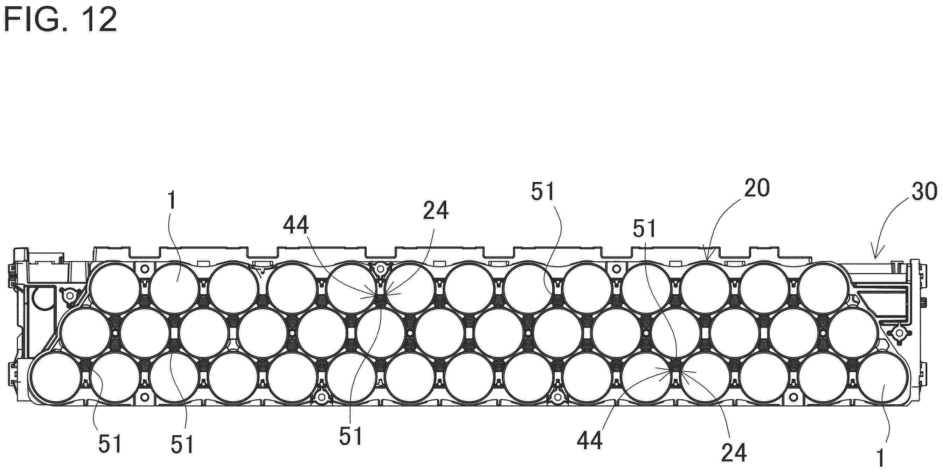

In the example shown in, for example, FIG. 13, the second partition 22 is divided into three by the cutouts 24 and arranged at an interval of 120° from each other in the rib receiving space 44 located in the dense space in which three adjacent secondary battery cells 1 are proximate to one another. In this structure, as shown in, for example, the longitudinal sectional view in FIG. 2, the cell accommodating spaces 41 accommodating the three adjacent secondary battery cells 1 are continuous with each other through the rib receiving spaces 44. This allows the uncured adhesive 51 to spread in the horizontal direction. The adhesive layer 50 that is cured thus has increased bonding strength. FIG. 2 is a longitudinal sectional view taken along line II-II in FIG. 1. FIGs. 16 and 17 also show section line II-II. As shown in FIG. 12, the rib receiving spaces 44 are defined at the positions to which the adhesive 51 is applied.

### (First Gap GP1)

As shown in the longitudinal sectional view in FIG. 2, the first gap GP1 is defined between the periphery of each push rib 14 and the corresponding cell side surface 1c of the adjacent secondary battery cell 1 when the push rib 14 is pushed into the corresponding rib receiving space 44. In the horizontal sectional view in FIG. 16, first gaps GP1 have a first cross-sectional area S1 indicated in solid black. The first cross-sectional area S1 is an area taken along a first plane intersecting with a direction in which the push ribs 14 protrude. As indicated by the part enclosed with the dashed line, the first cross-sectional area S1 is the sum of cross-sectional areas of the first gaps GP1 in the corresponding rib receiving space 44. In the example shown in FIG. 16, the first cross-sectional area S1 is the sum of the first cross-sectional areas S1 of three first gaps GP1.

### (Second Gap GP2)

As shown in the longitudinal sectional view in FIG. 2, the second gap GP2 is defined between each second cylinder 21 and a part of the corresponding cell side surface 1c of the adjacent secondary battery cell 1. As shown in, for example, FIGs. 5, 6, and 13, each second cylinder 21 has, on its inner surface, the recesses 26 extending in the length direction of the exterior can of the corresponding secondary battery cell 1 to define the second gaps GP2. The recesses 26 may extend continuously from the top to the bottom of the second holder 20. This allows easy application of the adhesive 51 in the length direction of the second holder 20. Each recess 26 may be arc-shaped in a cross-sectional view taken along a second plane. The uncured adhesive 51 is thus smoothly guided with less resistance.

As shown in FIG. 17, each second gap GP2 is defined in parts of the second cylinder 21 in a circumferential direction intersecting with the length direction of the exterior can. In the horizontal sectional view in FIG. 17, the second gaps GP2 have a second cross-sectional area S2 indicated in solid black. The second cross-sectional area S2 is an area taken along the second plane intersecting with the direction in which the push ribs 14 protrude. As indicated by the part enclosed with the dashed line, the second cross-sectional area S2 is the sum of cross-sectional areas of the second gaps GP2 in the corresponding rib receiving space 44. In the example shown in FIG. 17, the second cross-sectional area S2 is the sum of the second cross-sectional areas S2 of three second gaps GP2.

As shown in FIG. 2, the adhesive layer 50 continuously extends through the first gap GP1 and the second gap GP2. To form the adhesive layer 50, the uncured adhesive 51 is applied to each cutout bottom 25 of the corresponding rib receiving space 44 as shown in FIGs. 11 and 12 when assembling the battery pack 100. The push rib 14 is then pushed with its tip received through the uncured adhesive 51. A portion of the adhesive 51 then flows around the push rib 14 and enters the first gap GP1 between the push rib 14 and the cell side surface 1c of the corresponding secondary battery cell 1. Another portion of the adhesive 51 is pushed by the end face of the push rib 14 and enters the second gap GP2. Each second gap GP2 is continuous with the corresponding rib receiving space 44. This allows the uncured adhesive 51 applied to the cutout bottom 25 of the rib receiving space 44 to be smoothly guided to the corresponding second gap GP2, and pushed to the deep part of the second cylinder 21, which is not exposed and thus is difficult to reach. In other words, the uncured adhesive 51 is likely to be pushed toward the bottom of the secondary battery cell 1.

The first gaps GP1 have the first cross-sectional area S1 smaller than the second cross-sectional area S2 of the second gaps GP2 in the direction in which the rib receiving spaces 44 extend. More specifically, the second cross section indicated in solid black in the part enclosed with the dashed line in FIG. 17 is larger than the first cross-sectional area S1 indicated in solid black in the part enclosed with the dashed line in FIG. 16. This allows the uncured adhesive 51, which forms the adhesive layer 50, to be guided more easily to the second gap GP2 than to the first gap GP1 and thus facilitates application of the adhesive 51 to the second holder 20 in addition to the first holder 10, increasing the bonding strength of the secondary battery cells 1. A battery pack 800 in a comparative example shown in FIGs. 8 and 9 has the adhesive 51 applied simply to the surface of the secondary battery cell 801 exposed from the lower holder. In the battery pack 100 according to the present embodiment, the uncured adhesive 51 is easily guided to the region covered with the second holder 20. More specifically, a gel-like or highly viscous liquid substance such as the uncured adhesive 51 is likely to enter a region with small resistance. The path of the uncured adhesive 51 with a larger cross-sectional area thus allows the adhesive 51 to be applied to a region to which the adhesive 51 is difficult to be applied with known techniques. In particular, as shown in FIG. 11, the adhesive 51 applied to the interface between the second holder 20 and the first holder 10 is more likely to spread onto the exposed surfaces of the cell side surfaces 1c of the secondary battery cells 1 as a reaction of the first holder 10 being pushed. The adhesive 51 is thus less likely to move toward the second holder 20. The path of the adhesive 51 spreading upward as a reaction of being pushed, or in other words, the first gap GP1, is intentionally narrowed, and the second gap GP2 located below is intentionally widened to allow the adhesive 51 to flow downward, allowing the adhesive 51 to be applied to the regions covered with a subholder. This is difficult with known techniques.

As shown in FIG. 17, the second gaps GP2 are defined in parts of the cell side surfaces 1c in the circumferential direction of the secondary battery cells 1 arranged in a staggered manner. This effectively fixes and prevents rotation of the secondary battery cells 1 with adhesive layers 50 spaced in the circumferential direction, without bonding the entire cell side surfaces 1c of the secondary battery cells 1.

As shown in, for example, FIG. 13, a depth H1 of each cutout 24, or the distance between the upper surface of the second holder 20 and the cutout bottom 25, may be less than or equal to a half of the height of the second holder 20. Deeper cutouts 24 decrease the strength of the second holder 20. However, shallower cutouts 24 increase a length H2 of each recess 26 for guiding the uncured adhesive 51. This increases the path length of the adhesive 51, thus decreasing the likelihood that the adhesive 51 is reliably applied to the region extending toward the bottom surfaces of the secondary battery cells 1. The cutouts 24 may thus have the depth H1 of about one-third to a half of the height of the second holder 20, maintaining the balance between the strength of the second holder 20 and fixing of the secondary battery cells 1.

The push rib 14 has a height H3 smaller than the depth H1 of the cutout 24 to define a gap with the height h. The height h of the gap may be less than or equal to a quarter of the depth H1 of the cutout 24.

In the example described with reference to, for example, FIGs. 2 to 4, the three subholders that are the first holder 10, the second holder 20, and the third holder 30 have substantially the same height. The present disclosure is not limited to this structure, and the subholders may have different heights. Although the battery holder 40 is divided into three parts, or specifically, the first holder 10, the second holder 20, and the third holder 30 in Embodiment 1, the present disclosure is not limited to this structure. For example, the battery holder may be divided into four or more parts, or may be divided into two parts. When the battery holder is divided into two parts, the second holder 20 and the third holder 30 may be integral in the example in FIG. 1, for example.

### [Method for Manufacturing Battery Pack 100]

A method for manufacturing the battery pack 100 will now be described with reference to FIGs. 3 to 13. As shown in, for example, FIG. 5, the multiple cylindrical secondary battery cells 1 and the battery holder 40 are prepared. The battery holder 40 includes the first holder 10, the second holder 20, and the third holder 30. The first holder 10 includes the multiple first cylinders 11 each accommodating a portion of the cell side surface 1c of the corresponding secondary battery cell 1. The first holder 10 includes, between adjacent secondary battery cells 1, the push ribs 14 that are columnar and protruding toward the second holder 20 at the opening ends of the first cylinders 11 facing the second holder 20. The second holder 20 includes the multiple second cylinders 21 each accommodating another portion of the cell side surface 1c of the corresponding secondary battery cell 1. The second holder 20 has the cutouts 24 to receive the push ribs 14 at the positions corresponding to the push ribs 14 at the opening ends of the second cylinders 21 facing the first holder 10.

As shown in, for example, FIG. 3, the second holder 20 and the third holder 30 are joined together first. Lower portions of the cell side surfaces 1c of the secondary battery cells 1 are placed into the respective second cylinders 21 in the second holder 20 and into the respective third cylinders 31 in the third holder 30. As shown in FIG. 5, the second holder 20 and the third holder 30 are temporarily fixed and joined together by engaging multiple engagement protrusions on the third holder 30 with multiple engagement holes on the second holder 20.

As shown in FIG. 12, the uncured adhesive 51 is then applied to the cutouts 24 in the second holder 20.

As shown in FIG. 3, upper portions that are the remaining portions of the cell side surfaces 1c of the secondary battery cells 1 are then placed into the respective first cylinders 11 in the first holder 10. As shown in FIG. 13, the push rib 14 on the first holder 10 is inserted into the corresponding rib receiving space 44 in the second holder 20. The uncured adhesive 51 is then pushed into the first gaps GP1 defined between the peripheries of the push ribs 14 and the cell side surfaces 1c of adjacent secondary battery cells 1, and into the second gaps GP2 extending in the length direction between the inner surfaces of the second cylinders 21 being continuous with the ends of the cutout bottoms 25 and the cell side surfaces 1c of the adjacent secondary battery cells 1. The second gaps GP2 are defined in parts of the second cylinders 21 in the circumferential direction intersecting with the length direction. The first gaps GP1 have the first cross-sectional area S1, which is an area taken along the first plane intersecting with the direction in which each push rib 14 protrudes, smaller than the second cross-sectional area S2 of the second gaps GP2, which is an area taken along the second plane intersecting with the direction in which each push rib 14 protrudes, in the direction in which the rib receiving spaces 44 extend.

When the push ribs 14 on the first holder 10 are inserted into the respective rib receiving spaces 44 in the second holder 20, the uncured adhesive 51 is pushed, reaching the third holder 30 and thus bonding the third holder 30 to the second holder 20.

Finally, the uncured adhesive 51 is cured to form the adhesive layers 50. In this manner, the uncured adhesive 51 can be efficiently guided into the second holder 20 to reliably fix the secondary battery cells 1 in the respective cell accommodating spaces 41.

In the above example, the battery pack is attached to an electrical device to be driven to supply power to the electrical device. When the remaining capacity of the battery pack decreases or the battery pack deteriorates over time, the battery pack can be replaced to allow continuous use of the electrical device. One or more embodiments of the present disclosure are not limited to the replaceable battery pack mainly accommodating the secondary battery cells. The present disclosure may also be applicable to the secondary battery cells accommodated in a housing of the electrical device. In one or more embodiments of the present disclosure, a battery pack may include secondary battery cells housed in a case. Thus, the battery pack may also include the secondary battery cells for driving that are housed in the housing of the electrical device. In other words, one or more embodiments of the present disclosure are not limited to the replaceable battery pack and are also applicable to an electrical device incorporating the secondary battery cells.

### INDUSTRIAL APPLICABILITY

The battery pack according to one or more embodiments of the present disclosure may be used as a power supply device for movable bodies such as electrically assisted bicycles and electric carts. The battery pack may also be used as, for example, a power supply for portable electrical devices such as vacuum cleaners and power tools.

### REFERENCE SIGNS LIST

- 100: battery pack
- 1: secondary battery cell
- 1a: first end face
- 1b: second end face
- 1c: cell side surface
- 10: first holder
- 11: first cylinder
- 12: first partition
- 13: first window
- 14: push rib
- 20: second holder
- 21: second cylinder
- 22, 22a, 22b: second partition
- 23: protrusion
- 24: cutout
- 25: cutout bottom
- 26: recess
- 30: third holder
- 31: third cylinder
- 32: third partition
- 33: third window
- 40: battery holder
- 41: cell accommodating space
- 44: rib receiving space
- 50: adhesive layer
- 51: adhesive
- 60: lead plate
- 61: lead bonding surface
- 62: lead bend
- 70: circuit board
- 800: battery pack
- 801: secondary battery cell
- 810: upper holder
- 820: lower holder
- 840: battery holder
- 851: adhesive
- 900: battery pack
- 901: secondary battery cell
- 910: upper holder
- 920: middle holder
- 930: lower holder
- 940: battery holder
- h: height
- H1: depth of cutout
- H2: length of recess
- H3: height of push rib
- GP1: first gap
- S1: first cross-sectional area
- S2: second cross-sectional area

## Claims

1. A battery pack, comprising:
a plurality of secondary battery cells each contained in an exterior can being cylindrical;
a battery holder including
a first holder including a plurality of first cylinders each accommodating a portion of the exterior can of a corresponding secondary battery cell of the plurality of secondary battery cells arranged with end faces of the plurality of secondary battery cells aligned flush with one another, the first holder including first partitions defining the plurality of first cylinders, and
a second holder including a plurality of second cylinders each accommodating another portion of the exterior can of the corresponding secondary battery cell, the second holder including second partitions defining the plurality of second cylinders,
the first holder and the second holder in the battery holder being connected to each other to have the plurality of first cylinders continuous with the plurality of respective second cylinders and define cell accommodating spaces separately accommodating the plurality of secondary battery cells,
the first holder including, between adjacent secondary battery cells of the plurality of secondary battery cells, push ribs being columnar and protruding toward the second holder at opening ends of the plurality of respective first cylinders facing the second holder,
the second holder having cutouts receiving the respective push ribs at positions corresponding to the push ribs at opening ends of the plurality of respective second cylinders facing the first holder,
the second holder having rib receiving spaces surrounding peripheries of the respective push ribs, the rib receiving spaces being defined by the second partitions in the plurality of second cylinders having the cutouts and exterior cans of the adjacent secondary battery cells exposed from the cutouts; and
adhesive layers continuously extending through first gaps and second gaps, each of the first gaps being defined between a periphery of a corresponding push rib of the push ribs placed in the respective rib receiving spaces and the exterior cans of the adjacent secondary battery cells, each of the second gaps extending in a length direction of the plurality of secondary battery cells between an inner surface of a corresponding second cylinder of the plurality of second cylinders and the exterior cans of the adjacent secondary battery cells, the inner surface being continuous from an end of a bottom surface of a corresponding cutout of the cutouts, each of the second gaps being defined in parts of the plurality of second cylinders in a circumferential direction intersecting with the length direction,
wherein the first gaps have a first cross-sectional area smaller than a second cross-sectional area of the second gaps in a direction in which the rib receiving spaces extend, the first cross-sectional area is an area taken along a first plane intersecting with a direction in which the push ribs protrude, and the second cross-sectional area is an area taken along a second plane intersecting with the direction in which the push ribs protrude.

2. The battery pack according to claim 1, wherein the plurality of second cylinders in the second holder have inner surfaces defining recesses in regions defining the second gaps.

3. The battery pack according to claim 2, wherein the recesses are arc-shaped in a cross-sectional view taken along the second plane.

4. The battery pack according to claim 1, wherein
the battery holder further includes a third holder including a plurality of third cylinders each accommodating still another portion of the exterior can of the corresponding secondary battery cell, and
the third holder is connected to a second bonding surface of the second holder opposite to a first bonding surface facing the first holder.

5. The battery pack according to claim 4, wherein the first holder, the second holder, and the third holder have substantially the same height.

6. The battery pack according to any one of claims 1 to 5, wherein
each of the push ribs has an end face spaced from a bottom surface of a corresponding cutout of the cutouts, and
each of the adhesive layers extends in a gap between the end face of a corresponding push rib of the push ribs and the bottom surface of a corresponding cutout of the cutouts.

7. The battery pack according to any one of claims 1 to 5, wherein each of the rib receiving spaces is defined by three or more secondary battery cells arranged adjacent and proximate to one another in the battery holder, and the rib receiving spaces receive the respective push ribs.

8. The battery pack according to claim 7, wherein
the plurality of secondary battery cells are arranged in rows in a staggered manner, and
the push ribs are hexagonal prisms.

9. The battery pack according to any one of claims 1 to 5, further comprising:
lead plates connecting the end faces of the plurality of secondary battery cells.

10. A method for manufacturing a battery pack, the battery pack including a plurality of secondary battery cells each contained in an exterior can being cylindrical and a battery holder including a first holder and a second holder, the method comprising:
preparing the first holder and the second holder, the first holder including a plurality of first cylinders each to accommodate a portion of the exterior can of a corresponding secondary battery cell of the plurality of secondary battery cells, the first holder including, between adjacent secondary battery cells of the plurality of secondary battery cells, push ribs being columnar and protruding toward the second holder at opening ends of the plurality of first cylinders facing the second holder, the second holder including a plurality of second cylinders each to accommodate another portion of the exterior can of the corresponding secondary battery cell, the second holder having cutouts to receive the respective push ribs at positions corresponding to the push ribs at opening ends of the plurality of second cylinders facing the first holder;
placing a portion of the exterior can of each of the plurality of secondary battery cells into a corresponding second cylinder of the plurality of second cylinders in the second holder;
applying an uncured adhesive to the cutouts of the second holder;
placing another portion of the exterior can of each of the plurality of secondary battery cells into a corresponding first cylinder of the plurality of first cylinders in the first holder;
inserting the push ribs on the first holder into rib receiving spaces on the second holder;
pushing the uncured adhesive into first gaps and second gaps, each of the first gaps being defined between a periphery of a corresponding push rib of the push ribs and exterior cans of adjacent secondary battery cells, each of the second gaps extending in a length direction of the plurality of secondary battery cells between an inner surface of a corresponding second cylinder of the plurality of second cylinders and the exterior cans of the adjacent secondary battery cells, the inner surface being continuous from an end of a bottom surface of a corresponding cutout of the cutouts, each of the second gaps being defined in parts of the plurality of second cylinders in a circumferential direction intersecting with the length direction; and
curing the uncured adhesive,
wherein the first gaps have a first cross-sectional area smaller than a second cross-sectional area of the second gaps in a direction in which the rib receiving spaces extend, the first cross-sectional area is an area taken along a first plane intersecting with a direction in which the push ribs protrude, and the second cross-sectional area is an area taken along a second plane intersecting with the direction in which the push ribs protrude.

11. The method according to claim 10, wherein the battery holder further includes a third holder including a plurality of third cylinders each to accommodate still another portion of the exterior can of the corresponding secondary battery cell,
the method further comprises
engaging the third holder with the second holder to temporarily fix the third holder to the second holder, and
inserting the push ribs into the respective rib receiving spaces to push the uncured adhesive until the uncured adhesive reaches the third holder, and
the third holder is bonded to a second bonding surface of the second holder opposite to a first bonding surface facing the first holder.
